# EUROPÄISCHE PATENTANMELDUNG

(11) **EP 2 119 646 A1**
(43) Veröffentlichungstag der Anmeldung: **18.11.2009**
(21) Anmeldenummer: 09158584.4
(22) Anmeldetag: 23.04.2009
(51) Int. Cl.: B65G 17/34, B65G 23/08

(54) **Antrieb für den Quergurt eines Quergurtsorters**

(30) Priorität: 15.05.2008 DE 102008023685
(71) Anmelder: Siemens Aktiengesellschaft, 80333 München (DE)
(72) Erfinder: Hirsch, Dieter, 91058, Erlangen (DE); Linke, Martin, 81371, München (DE); Lorenz, Alois, 94086, Griesbach (DE); Tanz, Torsten, 78247, Hilzingen (DE)

(57) **Zusammenfassung**

Die Erfindung betrifft einen Quergurtsorter zum Transportieren und Sortieren von Stückgut, bestehend aus einer Vielzahl auf einer Förderbahn (12) bewegter, zu einem Zug gekoppelter oder individuell verfahrbarer Sorterelemente (1), die jeweils mit einem endlos um Umlenkrollen (2, 3) umlaufenden, quer zur Transportrichtung (6) der Sorterelemente (1) antreibbaren Quergurt (4) versehen sind, auf dem das Stückgut aufliegend transportierbar und an festgelegten Be- und/oder Entladestellen be- und/oder entladbar sind, wozu mindestens eine Umlenkrolle (2, 3) des Quergurtes (4) mit einem Antrieb korrespondiert. Um einen kostengünstigen, zuverlässigen und raumsparenden Antrieb für den Quergurt (4) von gattungsgemäßen Sorterelementen (1) zu schaffen, wird vorgeschlagen, den Antrieb der mindestens einen Umlenkrolle (2, 3) über einen Trommelmotor erfolgen zu lassen, der innerhalb der Umlenkrolle (2, 3) angeordnet ist.

## Beschreibung

Die Erfindung betrifft einen Quergurtsorter zum Transportieren und Sortieren von Stückgut, bestehend aus einer Vielzahl auf einer Förderbahn bewegter, zu einem Zug gekoppelter oder individuell verfahrbarer Sorterelemente, die jeweils mit einem endlos um Umlenkrollen umlaufenden, quer zur Transportrichtung der Sorterelemente antreibbaren Quergurt versehen sind, auf dem das Stückgut aufliegend transportierbar und an festgelegten Be- und/oder Entladestellen be- und/oder entladbar ist, wozu mindestens eine Umlenkrolle des Quergurtes mit einem Antrieb korrespondiert.

Derartige Quergurtsorter sind Teil eines Hochleistungs-Sortiersystems zur Stückgutsortierung, das im Allgemeinen aus einer horizontal oder vertikal umlaufenden Aneinanderreihung von Sorterelementen besteht, die die zu sortierenden Stückgüter zu deren Bestimmungsort (Sortierziel) tragen, wo die Sorterelemente mechanisch oder elektrisch aktiviert werden.

Das Stückgut liegt beim Transport auf dem auf dem Sorterelement angeordneten endlosen Quergurt auf, der um zwei voneinander beabstandete Umlenkrollen geführt ist, deren Achsen in Transportrichtung der Sorterelemente ausgerichtet sind. Mindestens eine der Umlenkrollen ist durch einen Antrieb aktivierbar so dass der umlaufende Quergurt das aufliegende Stückgut quer zur Transportrichtung ausschleust. Diese Art Sorter werden als Querband-, Quergurt- oder auch als Crossbelt-Sorter bezeichnet und sind in vielen Variationen am Markt bekannt.

Der Antrieb der Quergurte dieser Sorter bereitet immer noch Zuverlässigkeits- und/oder Kostenprobleme; zudem erfordern die bisher verwendeten Ausführungen einen großen Einbauraum.

Für den Antrieb der Quergurte der Sorterelemente sind prinzipielle zwei Lösungen bekannt. Bei der ersten Lösung wird der Antrieb der Quergurte über einen Elektromotor mit Riemenscheibe auf einen Zahnriemen realisiert, der wiederum eine Riemenscheibe auf der angetriebenen Umlenkrolle des Quergurtes antreibt. Dies Lösung hat den Nachteile des hohen mechanischen Verschleißes, der Anfälligkeit gegenüber Verschmutzungen, sowie eines großer Bauraums, da die Riemenscheiben und der Antriebsriemen auf Grund der zu übertragenden Leistung und der Materialeigenschaften des Riemens bestimmte Abmessungen nicht unterschreiten darf. Des Weiteren bedarf es zusätzlicher elektronischer Steuereinheiten mit elektrischen Leitungsverbindungen, die störanfällig sind.

Die zweite realisierte Lösung besteht aus einem mechanischen Reibradantrieb des Quergurtes. Die Energie zum Antrieb der Reibrad - Kegelradgetriebe - Reibrad Kombination wird aus der Relativbewegung der Sorterelemente zur einer feststehenden Unterkonstruktion über das Anlenken einer Betätigungsklappe zum ersten Reibrad (Antriebsrad) gewonnen. Wesentliche Nachteile der zweiten Lösung sind ebenfalls der mechanische Verschleiß, die Anfälligkeit gegenüber Verschmutzungen, sowie der große Bauraum, da auch die Reibräder und das Kegelradgetriebe auf Grund der zu übertragenden Leistung bestimmte Abmessungen nicht unterschreiten dürfen. Ein weiterer Nachteil besteht darin, dass keine aktive Einflussnahme auf die Geschwindigkeits- und die Beschleunigungswerte des Quergurtes möglich ist.

Die Aufgabe der vorliegenden Erfindung besteht darin, einen kostengünstigen, zuverlässigen und raumsparenden Antrieb für den Quergurt gattungsgemäßer Sorterelemente zu schaffen.

Zur Lösung der Aufgabe wird vorgeschlagen, dass der Antrieb der mindestens einen Umlenkrolle für den Quergurt über einen Trommelmotor erfolgt, der innerhalb der mindestens einen Umlenkrolle angeordnet ist.

Trommelmotoren sind an sich bekannt, sie dienen unter anderem zum Antrieb von Förderbändern für den Transport von Massengütern der verschiedensten Art. Durch die kompakte raumsparende Bauweise und die Reduzierung auf wenige Komponenten hat der Trommelmotor den Standardgetriebemotor immer mehr aus der Fördertechnik verdrängt. Der Trommelmotor besteht gewöhnlich aus einem Elektromotor, einem Getriebe, zwei Flanschen mit Aufnahmen für die Lagerung und einem Rohr, in dem alle Komponenten untergebracht sind.

Bei der erfindungsgemäßen Anwendung der Trommelmotore zum Antrieb der Quergurte von gattungsgemäßen Sorterelementen sind Kosten- und Zuverlässigkeitsvorteile sowie eine wesentliche Verringerung des notwendigen Einbauraumes zu erwarten. Kostenvorteile entstehen vor allem durch die Einsparung des externen Antriebs und seiner Kraftübertragung zur Antriebsrolle. Zuverlässigkeitsvorteile entstehen durch die Eliminierung mehrerer externer Kraftübertragungselemente, die bisher äußeren Einflüssen, wie Staub und Fremdkörpern, ausgesetzt waren. Auch können die für die Funktion des Antriebs notwendigen Schmiermittel nicht ungewollt in die Umgebung entweichen.

In einer besonders günstigen Ausgestaltung der Erfindung wird vorgeschlagen, dass zusammen mit dem Trommelmotor innerhalb der Antriebrolle die Steuerungselektronik für den Quergurt des Sorterelementes angeordnet ist. Durch diese Ausgestaltung wird der gesamte Antrieb äußerst kompakt und funktionell, die Austauschbarkeit defekter oder verschlissener Umlenkrollen ist sehr einfach und der Platzbedarf des Antriebes ist vernachlässigbar.

Wenn erfindungsgemäß auch die Einrichtungen zur Datenkommunikation innerhalb der Antriebrolle angeordnet sind, wird kein größerer Raumbedarf benötigt, als für die bloße Umlenkrolle. Trotzdem sind alle Bauteile und Steuerungselemente zusammengefasst, die zum Steuern und Betreiben des Sorterelementes bzw. des Quergurtes benötigt werden.

Durch die Mittel und Maßnahmen der Erfindung wird es ermöglicht, über die in die Umlenkrolle integrierte Steuerungselektronik und entsprechende Aktoren die Geschwindigkeit und Beschleunigung des Quergurtes von außen mittels Datenkommunikation (z.B. CanOpen Bus) zu verändern.

Erfindungsgemäß können alle benötigen digitalen Signale (Input / Output) oder Sensorsignale direkt über die Steuerungselektronik erfasst und via Bus von Außen abgetastet und ggf. beeinflusst werden.

Ein besonderer Vorteil für den erfindungsgemäßen Einsatz der Trommelmotore in mobilen Sorterelementen besteht darin, dass in die Antriebsrolle Trommelmotoren in Niedervoltvarianten kleiner 48V eingebaut werden. Dadurch kann die Energieübertragung vom stationären Teil der Sorter zum mobilen Teil, den Sorterelementen, wesentlich einfacher und kostengünstiger gestaltet werden.

Die Antriebsenergie für die Trommelmotore kann beispielsweise über Schleifleitungen oder induktiv an das Sorterelement übertragen werden oder von auf den Sorterelementen mitgeführten Energiespeichern abgeleitet werden.

Die Erfindung weist eine Reihe von Vorteilen dadurch auf, dass mindestens eine der beiden Umlenkrollen des Quergurtes durch eine Rolle mit einem integrierten Elektromotor und der Steuerungselektronik ersetzt wird. Die externe Steuerelektronik wird eliminiert und durch die im Motor integrierte Elektronik ersetzt. Dadurch wird der Installationsaufwand minimiert, die Wartungs- und Diagnosefreundlichkeit wird verbessert und Stillstandszeiten des Systems werden verringert. Weniger Leitungen und Steckverbindungen sowie eine geringere Anzahl von im Sorterelement eingebauten Elektronik Bauteilen reduzieren die Störanfälligkeit durch Leitungsbruch und durch Kontaktprobleme an den Stellen der bisherigen Leitungsverbindungen.

Trommelmotore sind industrielle Massenprodukte, die umfangreiche Tests und Optimierungsprozesse durchlaufen haben und deren Zuverlässigkeit den rauen Bedingen des Industrieeinsatzes angepasst ist. Die für den Anwendungsfall einzusetzenden Trommelmotoren sind wartungsfrei, sie bieten den Vorteil der Reduzierung der bewegten Massen und haben eine geringere Geräuschemission als herkömmliche Antriebe und sie bieten auf Grund ihrer äußerst kompakten Bauweise einen überdurchschnittlich hohen Wirkungsgrad. Eine Reduzierung der Bauhöhe der Sorterelemente erbringt eine deutliche Materialeinsparung und eine wesentlich kompaktere Bauform.

Durch die Integration der Steuerungselektronik in den Motor steigert sich auch die Diagnosefähigkeit im Fehlerfall bei gleichzeitiger Reduzierung der Ausfallzeit durch schnelle Austauschbarkeit der Antriebsrolle mit der Steuerungselektronik.

Ein Ausführungsbeispiel der Erfindung ist in der Zeichnung dargestellt, wird nachfolgend beschrieben. Es zeigt:
- Figur 1: Ein Sorterelement nach der Erfindung in der Seitenansicht,
- Figur 2: das Sorterelement nach Figur 1 in der Draufsicht und
- Figur 3: den erfindungsgemäßen Trommelmotor.

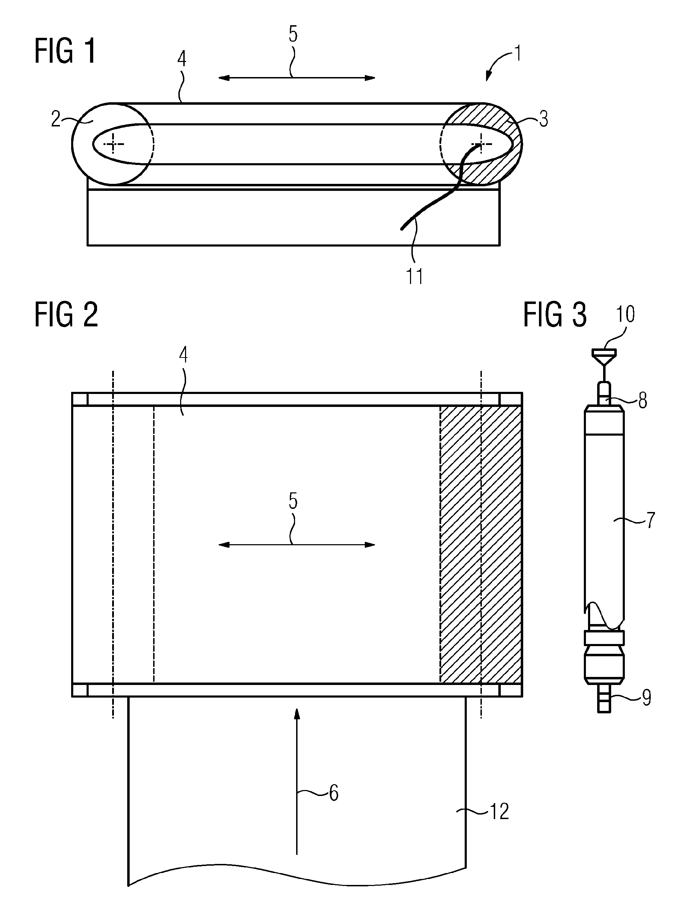

In Figur 1 ist mit 1 allgemein das schematisch dargestellte Sorterelement bezeichnet, auf dem der um zwei Umlenkrollen 2 und 3 endlos geführte Quergurt 4 angeordnet ist. Auf dem Quergurt 4 liegt ein (nicht dargestelltes) Stückgut auf, das durch Antreiben des Quergurtes 4 mittels der Umlenkrolle 3 in Pfeilrichtung 5 quer zur Transportrichtung 6 be- und entladen werden kann. Die Umlenkrolle 3 ist hohl und trägt in ihrem Inneren den Trommelmotor 7, der beidseitig bei 8 und 9 am Rahmen des Sorterelementes 1 gelagert ist. Der Trommelmotor 7 nimmt außerdem die Steuerelektronik für den Quergurt 4 sowie die Einrichtungen zur Datenkommunikation mit dem Anlagenrechner innerhalb des Rollenkörpers der Umlenkrolle auf. Über eine Datenleitung, die beispielsweise mit einem Datenbus verbunden ist, können alle benötigten digitalen Signale oder Sensorsignale erfasst und zur Steuerung der Anlage verwertet werden. Die Antriebsenergie des Trommelmotors 7 wird über die Stromleitung 11 zugeleitet, die mit einer Energiequelle für das Sorterelement in Verbindung steht. Das Sorterelement kann auf einer nicht näher spezifizierten Förderbahn 12 transportiert werden. Zum Be- und Entladen des Sorterelementes 1 wird jeweils der Trommelmotor 7 aktiviert und treibt die Umlenkrolle 3 in Pfeilrichtung 5 an. Die Umlenkrolle 2 ist nicht angetrieben und wird über den um diese geschlungenen Quergurt 4 mitgenommen.

## Patentansprüche

1. Quergurtsorter zum Transportieren und Sortieren von Stückgut, bestehend aus einer Vielzahl auf einer Förderbahn (12) bewegter, zu einem Zug gekoppelter oder individuell verfahrbarer Sorterelemente (1), die jeweils mit einem endlos um Umlenkrollen (2, 3) umlaufenden, quer zur Transportrichtung (6) der Sorterelemente (1) antreibbaren Quergurt (4) versehen sind, auf dem das Stückgut aufliegend transportierbar und an festgelegten Be- und/oder Entladestellen be- und/oder entladbar ist, wozu mindestens eine Umlenkrolle (2, 3) des Quergurtes (4) mit einem Antrieb korrespondiert,
**dadurch gekennzeichnet,**
**dass** der Antrieb der mindestens einen Umlenkrolle (2, 3) für den Quergurt (4) über einen Trommelmotor (7) erfolgt, der innerhalb der mindestens einen Umlenkrolle (2, 3) angeordnet ist.

2. Quergurtsorter nach Anspruch 1,
**dadurch gekennzeichnet,**
**dass** zusammen mit dem Trommelmotor (7) innerhalb der mindestens einen Umlenkrolle (2, 3) die Steuerungselektronik für den Quergurt (4) des Sorterelementes (1) angeordnet ist.

3. Quergurtsorter nach Anspruch 1 und 2,
**dadurch gekennzeichnet,**
**dass** Einrichtungen zur Datenkommunikation innerhalb der mindestens einen, den Trommelmotor (7) aufnehmenden Umlenkrolle (2, 3) angeordnet sind.

4. Quergurtsorter nach Anspruch 1 bis 3,
**dadurch gekennzeichnet,**
**dass** mittels der in die Umlenkrolle (2 und/oder 3) integrierten Steuerungselektronik und entsprechender Aktoren die Geschwindigkeit und Beschleunigung des Quergurtes (4) von außen mittels Datenkommunikation veränderbar sind.

5. Quergurtsorter nach Anspruch 1 bis 4,
**dadurch gekennzeichnet,**
**dass** alle benötigen Digitalen Signale (Input / Output) oder Sensorsignale direkt über die Steuerungselektronik erfassbar und mittels eines Daten-Bus' von Außen abtastbar und ggf. beeinflussbar sind.

6. Quergurtsorter nach Anspruch 1 bis 5,
**dadurch gekennzeichnet,**
**dass** in die mindestens eine Umlenkrolle (2, 3) Trommelmotoren (7) in Niedervoltvarianten kleiner 48V eingebaut werden.
